# EUROPÄISCHE PATENTANMELDUNG

(11) **EP 1 346 855 A2**
(43) Veröffentlichungstag der Anmeldung: **24.09.2003**
(21) Anmeldenummer: 03005984.4
(22) Anmeldetag: 18.03.2003
(51) Int. Cl.: B60G 7/00

(54) **Querlenker einer Radaufhängung**

(30) Priorität: 22.03.2002 DE 10212791
(71) Anmelder: Benteler Automobiltechnik GmbH, 33104 Paderborn (DE)
(72) Erfinder: Asmussen, Lars, 33758 Schloss Holte (DE); Hansen, Rainer, 33106 Paderborn (DE); Streubel, Wolfgang, 32756 Detmold (DE)
(74) Vertreter: Ksoll, Peter, Dr.-Ing.

(57) **Zusammenfassung**

Ein Querlenker für die Radaufhängung eines Kraftfahrzeugs besitzt einen L-förmig konfigurierten Schalenkörper aus Metallblech mit zwei Längsabschnitten (3, 4) und einem zwischen den Längsabschnitten (3, 4) befindlichen Bogenabschnitt. Der Schalenkörper (2) weist eine Boden (12) mit randseitigen Schenkeln (13, 14, 15) auf. An die Schenkel (13, 14, 15) schließen sich einstückig nach innen zur Mittellängsebene (ML) des Schalenkörpers gerichtete Stege an. Charakteristisch für den erfindungsgemäßen Querlenker (1) ist die einschalige Bauweise. Der Steg (16) am inneren Umfang des Bogenabschnitts (5) ist breiter bemessen als an seinen Enden. Am äußeren Umfang des Bogenabschnitts ist einstückig ein Fortsatz (21) ausgeformt, der eine Lageranbindung (23) bildet. Zur Herstellung des Schalenkörpers (2) wird zunächst eine Metallplatine zu einem schalenförmigen Vorformling umgeformt, der dann anschließend in einer Umformvorrichtung unter bereichsweiser innerer Abstützung des Bodens (12) durch einen Innenstempel über einen Außenstempel in einer Hohlform unter einwärts gerichteter Umstellung der freien Enden der Schenkel (13, 14, 15) zum Schalenkörper (2) endgeformt wird.

## Beschreibung

Die Erfindung betrifft einen Querlenker als Fahrwerkskomponente der Radaufhängung eines Kraftfahrzeugs und ein Verfahren zur Herstellung des einschaligen Schalenkörpers für einen Querlenker.

Ein gattungsgemäßer Querlenker zählt durch die DE 200 09 695 U1 zum Stand der Technik. Der Querlenker ist als hohle Stahl-Konfiguration aus gepressten, miteinander verschweißten Stahlblechen gebildet und mindestens abschnittsweise mit einem die Knicksteifigkeit erhöhenden inneren Verstärkungsblech versehen. Das Verstärkungsblech wird dabei in der Ebene angeordnet, in welcher sich die Knickbeanspruchungen auswirken. Dieser Querlenker hat sich in der Praxis bewährt. Im Vergleich zu Massivstrukturen wird ein deutlich günstigeres Verhalten bei Biege- und Torsionsbeanspruchungen erzielt. Obwohl bei dem Querlenker bereits eine Verringerung des Gewichts erreicht werden konnte, erscheint eine weitere Bauteiloptimierung, auch hinsichtlich des Gewichts , wünschenswert.

Der Erfindung liegt daher ausgehend vom Stand der Technik die Aufgabe zugrunde, einen Querlenker zu schaffen, der in gewichtsoptimierter Bauweise ein hohes Steifigkeitsverhalten besitzt, und ein Verfahren zu dessen Herstellung aufzuzeigen.

Die Lösung des gegenständlichen Teils der Aufgabe besteht nach der Erfindung in einem Querlenker gemäß den Merkmalen von Anspruch 1.

Der verfahrensmäßige Teil der Aufgabe wird durch die Maßnahmen von Anspruch 8 gelöst.

Kernpunkt der Erfindung bildet die einschalige Bauweise des Querlenkers, wobei sich an die Schenkel des Schalenkörpers einstückig nach innen zur Mittellängsebene gerichtete Stege anschließen.

Zur Herstellung des Schalenkörpers wird eine auf die spätere Kontur des Querträgers konfigurativ angepasste Metallplatine zu einem schalenförmigen Vorformling mit einem Boden und randseitigen, vom Boden abstehenden Schenkeln umgeformt. Die eingesetzte Metallplatine ist anfangs eben und weist eine der Abwicklung des herzustellenden Schalenkörpers entsprechende Form auf. Der hieraus gefertigte Vorformling wird dann in einer Umformvorrichtung unter bereichsweise innerer Abstützung des Bodens mittels eines Innenstempels von einem Außenstempel in einer Hohlform zum Schalenkörper endgeformt. Hierbei werden die freien Enden der Schenkel einwärts in Richtung zur Mittellängsebene des Schalenkörpers umgeformt. Die Hohlform weist eine auf den Schalenkörper konfigurativ angepasste Gravur auf. Zweckmäßigerweise wird die Umformung der Schenkel durch Anschläge in der Hohlform begrenzt. Die Umformvorrichtung umfasst folglich ein dreigeteiltes Pressenwerkzeug, welches aus dem Innenstempel und dem Außenstempel sowie der Hohlform besteht.

Durch die aufgezeigte Vorgehensweise zur Herstellung des Schalenkörpers ist eine einfache und rationelle Fertigung möglich. Der erfindungsgemäße Querlenker besitzt eine hohe Steifigkeit. Diese wird durch die einwärts gestellten seitlichen Stege an den Schenkeln gewährleistet. Die Kontur und Geometrie der Stege wird bauteilgerecht auf die geforderte Biege- und Torsionssteifigkeit sowie die Knicksteifigkeit abgestimmt. Auf eine doppelschalige Ausführung des Querlenkers oder den Einsatz von Verstärkungsblechen wird erfindungsgemäß bewusst verzichtet. Hierdurch kann das Gewicht des Querlenkers nochmals deutlich reduziert werden.

Der Querlenker trägt innerhalb der Radaufhängung zu einer Verbesserung der Spurtreue bei und verstärkt die Stabilität einer Achse, insbesondere einer Vorderachse. Der Querlenker leistet damit einen Beitrag zur passiven Sicherheit eines Fahrzeugs ebenso wie zur Verbesserung des sportlichen Fahrverhaltens.

Vorteilhafterweise ist der Steg am inneren Umfang des Bogenabschnitts breiter bemessen als an seinen Enden (Anspruch 2). Diese Maßnahme trägt zur Erhöhung der Knicksteifigkeit im Bogenabschnitt bei und erhöht die Biege- und Torsionsbelastbarkeit des Querlenkers.

Die Schenkel verlaufen endseitig an den Längsabschnitten schräg zum Boden hin abgesenkt (Anspruch 3). In den Enden der Längenabschnitte sind gemäß Anspruch 4 in Richtung der Schenkel ausgestellte Durchzüge vorgesehen. Die Durchzüge dienen zur Aufnahme eines Kugelgelenks bzw. eines Gummilagers. Der Außenradius der Enden der Schenkel verläuft konzentrisch zu den Durchzügen, wobei die Schenkel hier über den gesamten Außenumfang in geringem Abstand zu dem Kragen der Durchzüge verlaufen.

Nach den Merkmalen von Anspruch 4 ist am äußeren Umfang des Bogenabschnitts einstückig ein Fortsatz ausgeformt, der eine Lageranbindung bildet. Am Fortsatz wird eine Hülse zur Aufnahme eines Gummimetalllagers gefügt. Die Kontur der freien Enden des Fortsatzes ist konfigurativ auf die Hülse abgestimmt. Dieses gewährleistet eine rationelle Bauweise und eine optimale Befestigung der Hülse am Schalenkörper.

Ferner ist gemäß den Merkmalen von Anspruch 5 vorgesehen, dass der Boden im Bogenabschnitt einen in Richtung der Schenkel ausgestellten Durchzug mit einem umlaufenden Kragen aufweist. Auch dieser Durchzug bildet eine Aufnahme für ein Anbauaggregat, insbesondere den Stoßdämpfer.

Die belastungsgerechte Auslegung des Steifigkeitsverhaltens kann beeinflusst werden durch eine Einprägung im Boden den Schalenkörpers, wie dies Anspruch 6 vorsieht. Die Dimension und Lage der Einprägung erfolgt in Abstimmung auf die jeweilige Ausführungsform des Querlenkers.

Die Erfindung ist nachfolgend anhand der Zeichnungen beschrieben. Es zeigen:
- Figur 1: in perspektivischer Darstellungsweise einen erfindungsgemäßen Querlenker mit einer Ansicht in den Schalenkörper;
- Figur 2: ebenfalls in perspektivischer Darstellungsweise einen Querlenker mit einer Ansicht auf den äußeren Boden des Schalenkörpers und
- Figur 3: in technisch stark vereinfachter Darstellungsweise ein Pressenwerkzeug zur Herstellung des Schalenkörpers eines Querlenkers.

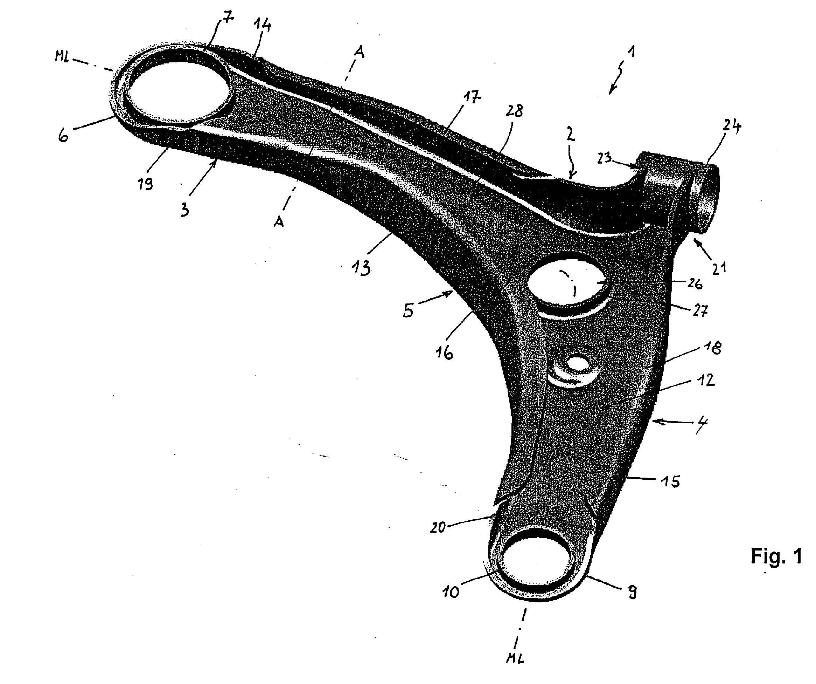

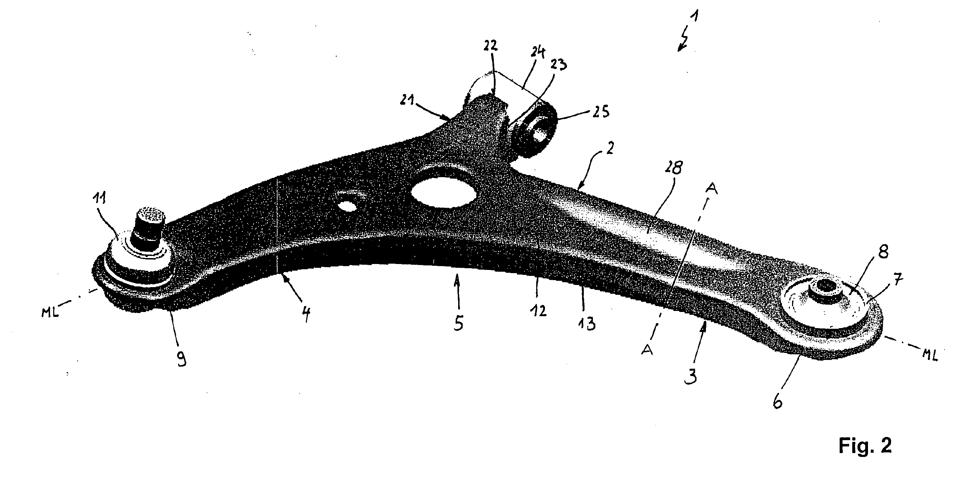

Die Figuren 1 und 2 zeigen einen erfindungsgemäßen Querlenker 1. Ein solcher Querlenker 1 kommt innerhalb der Radführung bzw. der Radaufhängung eines Kraftfahrzeugs zur Anwendung. Üblicherweise stehen für die Radführung jeweils zwei sogenannte Dreieck-Querlenker zur Verfügung. Der obere Querlenker ist über Gummilager mit der Karosserie verbunden. Der untere Querlenker ist am Achsträger befestigt. Beide Querlenker führen über Kugelgelenke den Achsschenkel. Schraubenfedern und Gasdruckstoßdämpfer sind separat voneinander am unteren Querlenker angeordnet.

Der Querlenker 1 weist einen L-förmige konfigurierten Schalenkörper 2 aus Metallblech auf mit zwei Längsabschnitten 3, 4 und einem zwischen den Längsabschnitten 3, 4 befindlichen Bogenabschnitt 5 auf.

Am freien Ende 6 des Längenabschnitts 3 ist eine Aufnahme in Form eines Durchzugs 7 für ein Kugelgelenk 8 (siehe Figur 1) vorgesehen. Das Ende 9 des Längenabschnitts 4 ist ebenfalls mit einer durch einen Durchzug 10 gebildeten Aufnahme für ein Gummilager 11 versehen.

Der Schalenkörper 2 weist einen Boden 12 mit randseitigen Schenkeln 13, 14, 15 auf. Die Schenkel 13, 14, 15 sind zum Boden 12 rechtwinklig ausgerichtet. An die Schenkel 13, 14, 15 schließen sich ebenfalls rechtwinklig nach innen zur Mittellängsebene ML des Schalenkörpers 2 gerichtete Stege 16, 17, 18 einstückig an. Man erkennt, dass der Steg 16 am inneren Umfang des Bogenabschnitts 5 breiter bemessen ist als an seinen Enden 19, 20. Die Schenkel 13, 14, 15 verlaufen endseitig zu den Enden 6 bzw. 9 der Längsabschnitte 3 bzw. 4 schräg zum Boden 12 des Schalenkörpers 2 hin abgesenkt.

Am äußeren Umfang des Bogenabschnitts 5 ist ein Fortsatz 21 vorgesehen, der an seinem freien Ende 22 eine Lageranbindung 23 bildet. Hier ist eine Hülse 24 für ein Gummilager 25 festgelegt. Die Schenkel 14, 15 sind am freien Ende 22 des Fortsatzes 21 halbrund ausgebildet und an die Kontur der Hülse 24 angepasst.

Man erkennt ferner, dass der Boden 12 im Bogenabschnitt 5 einen zu den Schenkeln 13, 14, 15 gleich gerichtet ausgestellten Durchzug 26 mit einem umlaufenden Kragen 27 aufweist. Im Boden 12 des Schalenkörpers 2 ist im Längsabschnitt 4 mit einer Einprägung 28 versehen. Die Einprägung 28 trägt zur Erhöhung der Steifigkeit des Querlenkers 1 bei.

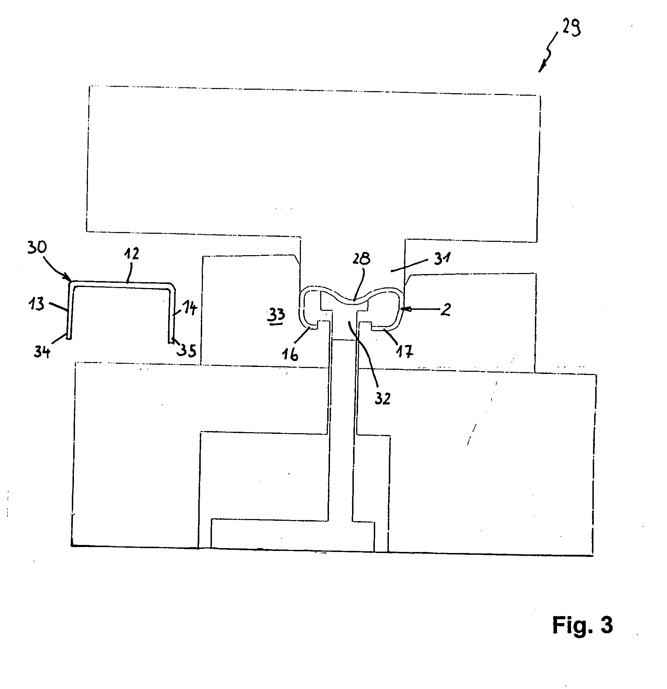

Die Figur 3 zeigt schematisch eine Umformvorrichtung zur Herstellung des Schalenkörpers 2 für einen Querlenker 1. Zu dessen Fertigung wird zunächst eine anfangs ebene Metallplatine zu einem schalenförmigen Vorformling 30 umgeformt. Ein solcher Vorformling 30 ist in der Figur 3 vereinfacht dargestellt. Die eingesetzte Metallplatine entspricht der ebenen Abwicklung des herzustellenden Schalenkörpers 2.

Die Umformvorrichtung 29 umfasst einen Außenstempel 31, einen Innenstempel 32 und eine ein- oder mehrteilige Hohlform 33. Der Vorformling 30 wird in die Umformvorrichtung 29 eingelegt und anschließend unter bereichsweise innerer Abstützung des Bodens 12 mittels des Innenstempels 32 von dem Außenstempel 31 in der Hohlform 33 endgeformt, wobei die freien Enden 34, 35 der Schenkel 13 bzw. 14 einwärts in Richtung zur Mittellängsebene ML des Schalenkörpers 2 zu den Stegen 16 bzw. 17 umgeformt werden. Die Endlage der Stege 16 bzw. 17 ist durch Anschläge 36, 37 der Hohlform begrenzt.

Die Figur 3 zeigt den Schalenkörper 2 in einer vertikalen Schnittdarstellung gemäß der Linie A-A in den Figuren 1 bzw. 2. Die Kontur des Außenstempels 31 und des Innenstempels 32 ist der Geometrie des Schalenkörpers mit der Einprägung 28 in diesem Bereich entsprechend geformt.

### Bezugszeichenaufstellung

- 1 -: Querlenker
- 2 -: Schalenkörper
- 3 -: Längsabschnitt
- 4 -: Längsabschnitt
- 5 -: Bogenabschnitt
- 6 -: Ende v. 3
- 7 -: Durchzug
- 8 -: Kugelgelenk
- 9 -: Ende v. 4
- 10 -: Durchzug
- 11 -: Gummilager
- 12 -: Boden
- 13 -: Schenkel
- 14 -: Schenkel
- 15 -: Schenkel
- 16 -: Steg
- 17 -: Steg
- 18 -: Steg
- 19 -: Ende v. 16
- 20 -: Ende v. 16
- 21 -: Fortsatz
- 22 -: freies Ende v. 21
- 23 -: Lageranbindung
- 24 -: Hülse
- 25 -: Gummilager
- 26 -: Durchzug
- 27 -: Kragen
- 28 -: Einprägung
- 29 -: Umformvorrichtung
- 30 -: Vorformling
- 31 -: Außenstempel
- 32 -: Innenstempel
- 33 -: Hohlform
- 34 -: freies Ende v. 13
- 35 -: freies Ende v. 14

- ML -: Mittellängsebene v. 2

## Patentansprüche

1. Querlenker als Fahrwerkskomponente der Radaufhängung eines Kraftfahrzeugs, welcher einen L-förmig konfigurierten Schalenkörper (2) aus Metallblech mit zwei Längsabschnitten (3, 4) und einem zwischen den Längsabschnitten (3, 4) befindlichen Bogenabschnitt (5) umfasst, wobei der Schalenkörper (2) einen Boden (12) mit randseitigen Schenkeln (13, 14, 15) aufweist, **dadurch gekennzeichnet, dass** sich an die Schenkel (13, 14, 15) nach innen zur Mittellängsebene (ML) des Schalenkörpers (2) gerichtete Stege (16, 17, 18) einstückig anschließen.

2. Querlenker nach Anspruch 1, **dadurch gekennzeichnet, dass** der Steg (16) am inneren Umlang des Bogenabschnitts (5) breiter bemessen ist als an seinen Enden (19, 20).

3. Querlenker nach Anspruch 1 oder 2, **dadurch gekennzeichnet, dass** die Schenkel (13, 14, 15) endseitig der Längsabschnitte (3, 4) schräg zum Boden (12) hin abgesenkt verlaufen.

4. Querlenker nach einem der Ansprüche 1 bis 3, **dadurch gekennzeichnet, dass** am äußeren Umfang des Bogenabschnitts (5) einstückig ein Fortsatz (21) ausgeformt ist, der eine Lageranbindung (23) bildet.

5. Querlenker nach einem der Ansprüche 1 bis 4, **dadurch gekennzeichnet, dass** der Boden (12) im Bogenabschnitt (5) einen in Richtung der Schenkel (13, 14, 15) ausgestellten Durchzug (26) mit einem umlaufenden Kragen (27) aufweist.

6. Querlenker nach einem der Ansprüche 1 bis 5, **dadurch gekennzeichnet, dass** in den Enden (6, 9) der Längsabschnitte (3, 4) in Richtung der Schenkel (13, 14, 15) ausgestellte Durchzüge (7, 10) vorgesehen sind.

7. Querlenker nach einem der Ansprüche 1 bis 6, **dadurch gekennzeichnet, dass** der Boden (12) des Schalenkörpers (2) eine Einprägung (28) aufweist.

8. Verfahren zur Herstellung des Schalenkörpers für einen Querlenker gemäß einem der Ansprüche 1 bis 7, bei der zunächst eine Metallplatine zu einem schalenförmigen Vorformling (30) mit einem Boden (12) und randseitigen Schenkeln (13, 14 bzw. 15) umgeformt wird und dann dieser Vorformling (30) unter bereichsweiser innerer Abstützung des Bodens (12) durch einen Innenstempel (32) über einen Außenstempel (31) in einer Hohlform (33) unter einwärts gerichteter Umstellung der freien Enden (34, 35) der Schenkel (13, 19) zum Schalenkörper (2) endgeformt wird.
